**Europäisches Patentamt**

**European Patent Office**

**Office européen des brevets**

(11) Veröffentlichungsnummer: **0 146 845**
**A2**

# (12) EUROPÄISCHE PATENTANMELDUNG

(21) Anmeldenummer: **84114809.1**

(22) Anmeldetag: **05.12.84**

(51) Int. Cl.⁴: **H 01 B 17/02**

(30) Priorität: **23.12.83 DE 3346728**

(43) Veröffentlichungstag der Anmeldung:
**03.07.85 Patentblatt 85/27**

(84) Benannte Vertragsstaaten:
**AT BE CH FR GB IT LI NL SE**

(71) Anmelder: **BROWN, BOVERI & CIE Aktiengesellschaft**
**Kallstadter Strasse 1**
**D-6800 Mannheim 31(DE)**

(72) Erfinder: **Herzig, Karlheinz, Dipl.-Ing.**
**Melibokusstrasse 5**
**D-6806 Viernheim(DE)**

(74) Vertreter: **Kempe, Wolfgang, Dr. et al,**
**c/o Brown, Boveri & Cie AG Postfach 351**
**D-6800 Mannheim 1(DE)**

(54) **Hochspannungsisolator mit einem Lichtleiter.**

(57) Hochspannungs-Freileitungen werden auch zur Übertragung von Nachrichten und Meßwerten genutzt. Dies kann mit Hilfe von Lichtleitern geschehen, die entlang dem Leiterseil oder innerhalb desselben angeordnet sind. Ein Problem dabei ist die Überführung des Lichtleiters von Hochspannungspotential auf Erdpotential, wozu der das Leiterseil tragende Hochspannungsisolator benutzt wird. Der Erfindung liegt die Aufgabe zugrunde, die Anordnung eines Lichtleiters in einem Hochspannungsisolator zu verbessern. Dies geschieht erfindungsgemäß so, daß die Zwischenschicht zwischen dem Strunk des Hochspannungsisolators und den aufgesetzten Schirmkörpern eine Fettschicht aufweist, mit mindestens einem darin eingebetteten Lichtleiter.

EP 0 146 845 A2

/...

Fig. 1

BROWN, BOVERI & CIE   AKTIENGESELLSCHAFT
Mannheim                      21. Dez. 1983
Mp.-Nr. 682/83                ZPT/P2-Du/Bt


## Hochspannungsisolator mit einem Lichtleiter

Die Erfindung bezieht sich auf einen Hochspannungsisolator gemäß dem Oberbegriff des Anspruchs 1. Hochspannungs-Freileitungen werden auch zur Übertragung von Nachrichten und Meßwerten genutzt. Dies kann mit Hilfe von Lichtleitern geschehen, die entlang dem Leiterseil oder im Leiterseil angeordnet sind. Die Einrichtungen zur Weiterverarbeitung der Nachrichten bzw. Meßwerte befinden sich auf Erdpotential. Ein Problem dabei ist die Überführung des Lichtleiters von Hochspannungspotential auf Erdpotential, wozu der das Leiterseil tragende Hochspannungsisolator oder ein hierzu parallel angeordneter Isolator benutzt wird.

Es ist ein Hochspannungsisolator bekanntgeworden, mit einem in einer Zwischenschicht zwischen Strunk und Außenhülle des Isolators angeordnetem Lichtleiter, der noch in einer aus einem Isolierschlauch bestehenden Schutzhülle untergebracht sein kann. Obwohl der Lichtleiter in der Zwischenschicht eingebettet ist, und diese einen Teil der unterschiedlichen Längendehnung zwischen Strunk und Außenhülle aufgrund von Zugbeanspruchungen aufzunehmen vermag, so ist doch nicht auszuschließen, daß die Längendehnungen sich nachteilig auf den Lichtleiter auswirken, und es zu einem Bruch des Lichtleiters kommen kann. Desweiteren können aufgrund von Luft- oder Gaseinschlüssen in der Schutzhülle (Isolierschlauch) des Lichtleiters Teilentladungen auftreten. Die bei Teilentladungen umgesetzten Energien treten u. a. als chemische Reaktion oder als elektromagnetische Strahlung in Form von Wärmeentwicklung und von hochfrequenten Impulsen auf. Derartige Teilentladungen können einen erheblichen zerstörenden Einfluß auf die Isolation haben.

Der Erfindung liegt die Aufgabe zugrunde, die Anordnung eines Lichtleiters in einem Hochspannungsisolator zu vereinfachen, bei Vermeidung der obengenannten Nachteile.

Diese Aufgabe wird erfindungsgemäß dadurch gelöst, daß die Zwischenschicht eine Fettschicht aufweist, mit mindestens einem darin eingebetteten Lichtleiter.

Zweckmäßige Ausgestaltungen der Erfindung sind in den Unteransprüchen gekennzeichnet.

Die mit der Erfindung erzielten Vorteile bestehen insbesondere darin, daß der Lichtleiter gegen Längendehnungen des Hochspannungsisolators geschützt ist, und daß desweiteren aufgrund der Einbettung des Lichtleiters in einer Schicht von gleichmäßiger Konsistenz Teilentladungen und die damit verbundenen Folgen - wie Zerstörung der Isolation - vermieden werden.

Die Erfindung wird nachstehend anhand einer in der Zeichnung dargestellten Ausführungsform erläutert.

Es zeigen:

Fig. 1    einen Längsschnitt durch einen Hochspannungsisolator;

Fig. 2    einen Querschnitt in der Ebene II - II des Isolators;

Fig. 3    im Detail die Einbettung eines Lichtleiters im Isolator nach Fig. 2.

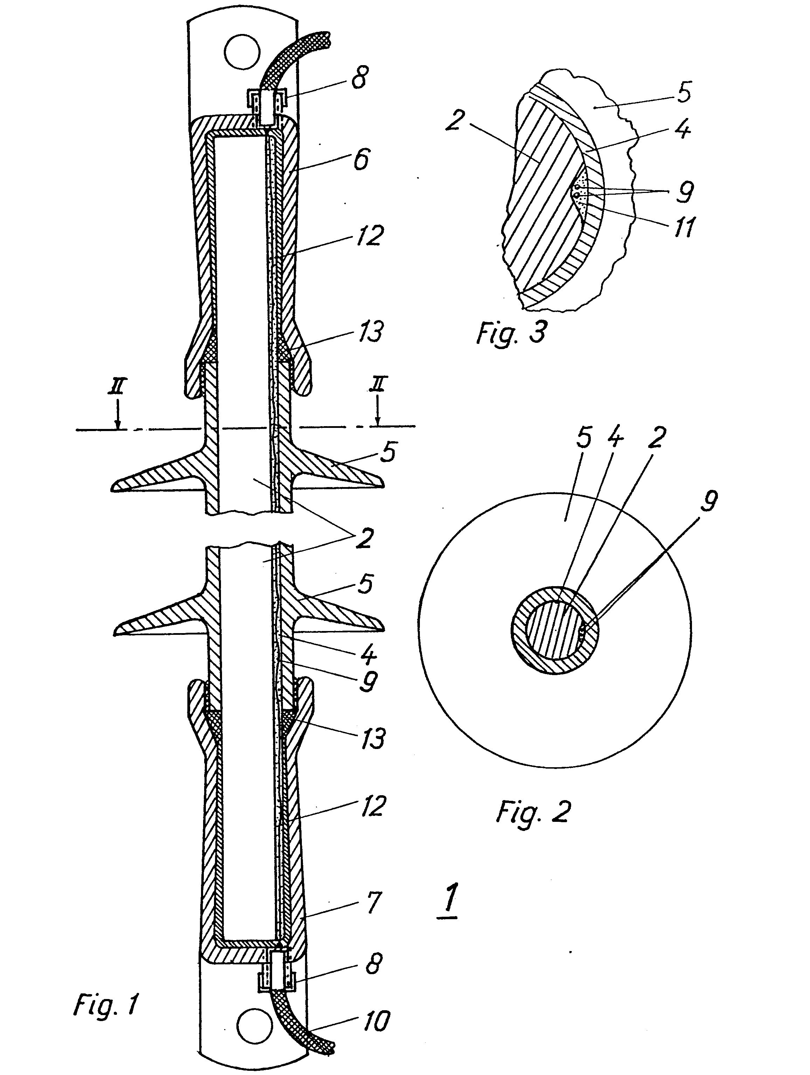

Der Fig. 1 ist ein Hochspannungsisolator 1 zu entnehmen, mit einem aus glasfaserverstärktem Kunststoff bestehenden Strunk 2, auf den Schirmkörper 5 aufgesetzt sind. Zwischen dem Strunk 2 und den Schirmkörpern 5 befindet sich eine Zwischenschicht, die aus einer alle Unebenheiten der Strunkoberfläche und der Innenwandoberfläche der Schirmkörper 5 ausfüllenden Fettschicht 4 besteht. Die Fettschicht 4 besteht aus einem synthetischen Fett mit im Betriebstemperaturbereich von -30°C bis +80°C etwa konstanter Viskosität, d.h. konstanter Penetrationszahl, z.B. einem Silikonfett auf reiner Siliziumbasis ohne Kohlenstoffanteile, das im angegebenen Temperaturbereich weder festen noch flüssigen Zustand annimmt. Die beiden Enden des Hochspannungsisolators 1 sind mit Isolatorkappen 6,7 versehen, die zur Befestigung des Hochspannungsisolators 1 am Mast sowie zur Halterung des Leiterseils am Hochspannungsisolator dienen. Die Isolatorkappen 6,7 sind zur Befestigung auf dem Strunk 2 mit Gießharz 12 vergossen. Die Abdichtung des Inneren der Isolatorkappen 6,7 gegen Einflüsse der Atmosphäre erfolgt durch ein Abdichtmaterial 13. An den beiden Stirnflächen der Isolatorkappen 6,7 ist jeweils eine Kabeldurchführung 8 angebracht, durch die der Lichtleiter 9 in den Hochspannungsisolator 1 eintritt und gegen das Eindringen von Feuchtigkeit geschützt ist. Der Teil des Lichtleiters 9, der im Bereich des Hochspannungsisolators angeordnet ist, ist von seiner Ummantelung 10 befreit. Der Lichtleiter 9 ist in der Silikonfettschicht 4 eingebettet, wobei nach Fig. 3 der Strunk 2 eine mit Silikonfett gefüllte Längsrille 11 aufweist, in welcher der Lichtleiter 9 angeordnet ist. Mindestens am spannungsführenden
Ende des Hochspannungsisolators 1 ist die Ummantelung 10
des Lichtleiters 9 mit einer metallischen Armierung zur
Potentialabschirmung versehen.

A n s p r ü c h e

1. Hochspannungsisolator mit einem glasfaserverstärkten Strunk und einer zwischen den darauf aufgebrachten Schirmkörpern und dem Strunk angeordneten Zwischenschicht, mit einem darin verlegten Lichtleiter, dadurch gekennzeichnet, daß die Zwischenschicht eine Fettschicht (4) aufweist, mit mindestens einem darin eingebetteten Lichtleiter (9).

2. Hochspannungsisolator nach Anspruch 1, dadurch gekennzeichnet, daß der Lichtleiter (9) in einer mit Fett gefüllten Längsrille (11) des Strunks (2) eingebettet ist.

3. Hochspannungsisolator nach Anspruch 1 oder 2, dadurch gekennzeichnet, daß der Lichtleiter (9) teilweise S-förmig verlegt ist, zur Aufnahme der Längendehnung des Isolators.

4. Hochspannungsisolator nach einem der Ansprüche 1 bis 3, dadurch gekennzeichnet, daß der Lichtleiter (9) in Form einer Wendel um den Strunk (2) verlegt ist.

1/1

0146845

Fig. 3

Fig. 2

Fig. 1

1